# EUROPEAN PATENT APPLICATION

(11) **EP 3 739 683 A1**
(43) Date of publication of application: **18.11.2020**
(21) Application number: 19821678.0
(22) Date of filing: 08.03.2019
(51) Int. Cl.: H01M 10/6551, H01M 10/6562, H01M 10/6555, H01M 10/653, H01M 10/625, H01M 10/647, H01M 2/10

(54) **BATTERY MODULE, BATTERY PACK COMPRISING SAME BATTERY MODULE, AND VEHICLE COMPRISING SAME BATTERY PACK**

(30) Priority: 20.06.2018 KR 20180071025
(71) Applicant: LG CHEM, LTD., Yeongdeungpo-gu, Seoul 07336 (KR)
(72) Inventor: LEE, Jin-Kyu, Daejeon 34122 (KR); KIM, Soo-Han, Daejeon 34122 (KR)
(74) Representative: Plasseraud IP
(86) International application number: PCT/KR2019/002746
(87) International publication number: WO 2019/245128

(57) **Abstract**

A battery module includes: a module case having a heatsink mounted to at least one side thereof; and a plurality of battery cells accommodated in the module case and stacked to be electrically connected to each other, and a plurality of pores are formed between facing battery cells among the plurality of battery cells to delay heat transfer.

## Description

### TECHNICAL FIELD

The present disclosure relates to a battery module, a battery pack including the battery module, and a vehicle including the battery pack.

The present application claims priority to Korean Patent Application No. 10-2018-0071025 filed on June 20, 2018 in the Republic of Korea, the disclosures of which are incorporated herein by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module having at least one battery cell first, and then configure a battery pack by using at least one battery module and adding other components such as electronic parts for controlling the battery module.

In the conventional battery module, a cooling system is designed based on the heat generation amount and the used temperature in order to prevent the life time from being rapidly shortened due to the temperature during the long term use. Recently, an edge cooling method where a heatsink is mounted to a bottom of the module case of the battery module is preferred.

In this edge cooling method, a plurality of battery cells arranged in the module case are in close contact with each other by means of surface contact. In the battery module adopting the edge cooling method, the heat generated from the battery cells is transferred to the heatsink at the bottom of the module case for cooling. Here, the heat transfer between adjacent battery cells inside the module case has no significant effect in view of cooling.

However, in the conventional battery module, if any one of the plurality of battery cells heats abnormally, the heat generated from the battery cell due to the abnormal heating is rapidly transferred to adjacent battery cells due to the arrangement where the battery cells are in close contact with each other.

The heat transfer within a short time to adjacent battery cells from the battery cell having abnormal heating has a problem in that the occurrence time of ignition or explosion of the whole battery module, which may threaten the safety of the user, may be rapidly advanced.

### DISCLOSURE

### Technical Problem

The present disclosure is directed to providing a battery module, which may secure stability by delaying the heat transfer to adjacent battery cells when any one of a plurality of battery cells heats abnormally, a battery pack including the battery module, and a vehicle including the battery pack.

### Technical Solution

In one aspect of the present disclosure, there is provided a battery module, comprising: a module case having a heatsink mounted to at least one side thereof; and a plurality of battery cells accommodated in the module case and stacked to be electrically connected to each other, wherein a plurality of pores are formed between facing battery cells among the plurality of battery cells to delay heat transfer.

A plurality of uneven portions may be provided to a surface of at least one battery cell among the facing battery cells so that the plurality of uneven portions make point contact with surfaces of adjacent battery cells to form the plurality of pores.

The plurality of uneven portions may be provided to all of surfaces of the facing battery cells.

The plurality of uneven portions may have a predetermined surface roughness and be made of a coating material that is applied to the surface of the at least one battery cells.

The coating material may be made of an aerogel with an insulating property.

The battery module may further comprise a sheet member provided between the facing battery cells to have the plurality of uneven portions.

The plurality of uneven portions may be provided to at least one surface of the sheet member.

The plurality of uneven portions may be provided to both surfaces of the sheet member.

The plurality of uneven portions may be disposed to face each other so that the plurality of pores are formed therebetween, and a portion of the sheet member that is in contact with the battery cell may be flat.

The plurality of battery cells may be stacked along a horizontal direction of the module case, and the heatsink may be mounted to an upper side or a lower side of the module case that faces an edge portion of the plurality of battery cells.

In addition, the present disclosure provides a battery pack, comprising: at least one battery module according to the above embodiment; and a pack case configured to package the at least one battery module.

Moreover, the present disclosure provides a vehicle, comprising at least one battery pack according to the above embodiment.

### Advantageous Effects

According to various embodiments as above, it is possible to provide a battery module, which may secure stability by delaying the heat transfer to adjacent battery cells when any one of a plurality of battery cells heats abnormally, a battery pack including the battery module, and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectioned view for illustrating a battery module according to an embodiment of the present disclosure.
FIG. 2 is a diagram for illustrating a main part of the battery module of FIG. 1.
FIG. 3 is a diagram for illustrating a process of forming a plurality of uneven portions of battery cells in the battery module of FIG. 1.
FIG. 4 is a diagram for illustrating the delay of heat transfer between the battery cells of the battery module of FIG. 1.
FIGS. 5 and 6 are diagrams for illustrating a battery module according to another embodiment of the present disclosure.
FIGS. 7 and 8 are diagrams for illustrating a sheet member according to still another embodiment of the present disclosure.
FIG. 9 is a diagram for illustrating a battery pack according to an embodiment of the present disclosure.
FIG. 10 is a diagram for illustrating a vehicle according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

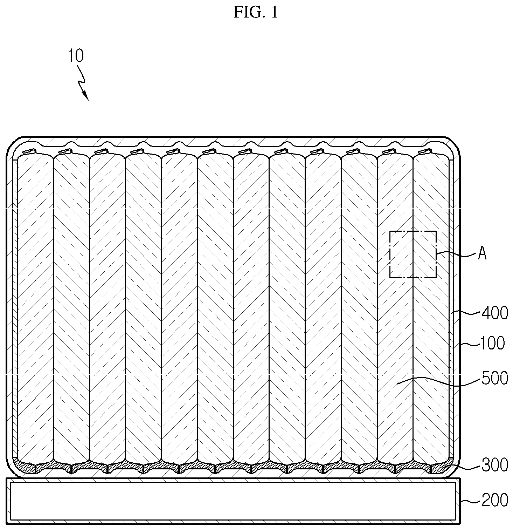

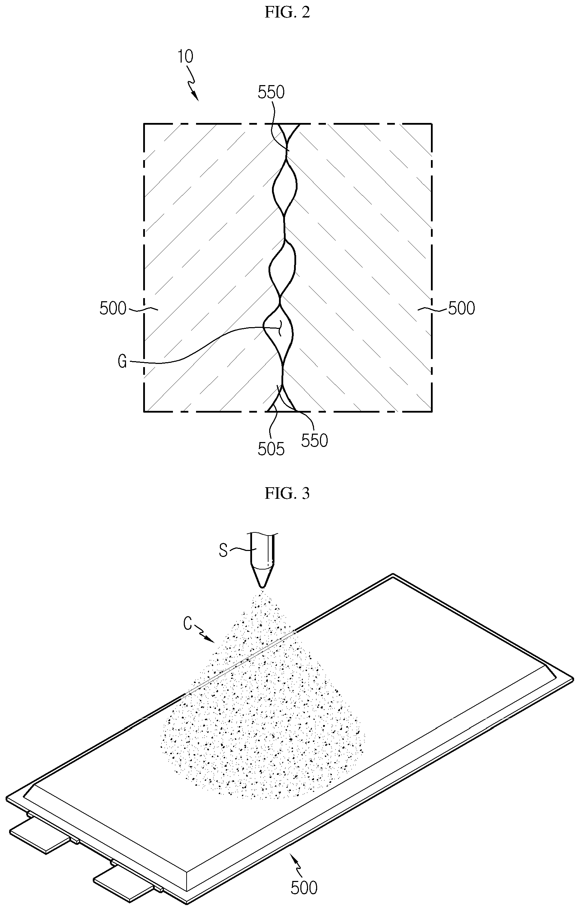

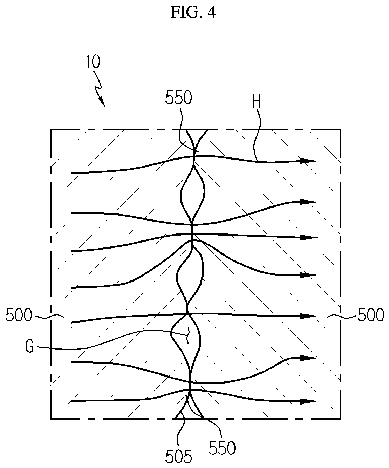

FIG. 1 is a cross-sectioned view for illustrating a battery module according to an embodiment of the present disclosure, FIG. 2 is a diagram for illustrating a main part of the battery module of FIG. 1, FIG. 3 is a diagram for illustrating a process of forming a plurality of uneven portions of battery cells in the battery module of FIG. 1, and FIG. 4 is a diagram for illustrating the delay of heat transfer between the battery cells of the battery module of FIG. 1.

Referring to FIGS. 1 to 4, a battery module 10 may include a module case 100, a heatsink 200, a thermal adhesive 300, a buffer pad 400, and battery cells 500.

The module case 100 forms the appearance of the battery module 10 and may accommodate the battery cells 500 described below. For this purpose, the module case 100 may have an accommodation space for accommodating the battery cells 500, explained later. The module case 100 may be made of metal or plastic.

The heatsink 200 is to cool the battery cells 500, explained later, and may be mounted to one side of the module case 100. The heatsink 200 adopts an edge cooling method and may be mounted to an upper side or a lower side of the module case 100, which faces an edge portion of the plurality of battery cells 500, explained later. In this embodiment, the heatsink 200 may be mounted to the lower side of the module case 100. The heatsink 200 has a space through which vapor or liquid coolant may flow, and may have metallic outer walls that define the space.

The thermal adhesive 300 is provided to an inner surface of a bottom portion of the module case 100 and may more stably fix the edge portion of the plurality of battery cells 500, explained later, to the inner surface of the bottom portion of the module case 100.

The thermal adhesive 300 may be made of a thermally conductive material, which may more smoothly transfer heat generated from the plurality of battery cells 500, explained later, toward the heatsink 200. For example, the thermally conductive material may include silicon, epoxy or polyurethane.

The buffer pad 400 may more effectively support the plurality of battery cells 500, explained later, inside the module case 100. The buffer pads 400 may be provided in a pair. The buffer pad 400 may be made of an elastic material such as a silicon pad.

The pair of buffer pads 400 may be disposed at both sides of the inner wall of the module case 100, respectively, to support both outermost sides of the plurality of battery cells 500, explained later.

The battery cell 500 may be a secondary battery, in particular a pouch-type secondary battery. Specifically, the battery cell 500 may be a pouch-type lithium polymer battery.

The battery cell 500 may be provided in plural, and the plurality of battery cells 500 may be stacked inside the module case 100 so as to be electrically connected to each other. Specifically, the plurality of battery cells 500 may be stacked along a horizontal direction of the module case 100 inside the module case 100. Here, the horizontal direction may correspond to a width direction on the figure.

A plurality of pores G may be formed between facing battery cells 500 among the plurality of battery cells 500 in order to delay heat transfer.

The plurality of pores G may be provided by a plurality of uneven portions 550 formed at a surface 505 of at least one of the plurality of battery cells 500.

Hereinafter, the plurality of uneven portions 550 will be described in more detail.

At the surface 505 of at least one of the facing battery cells 500, the plurality of uneven portions 550 making point contact with the surface 505 of adjacent battery cells 500 to form the plurality of pores G may be provided.

The plurality of uneven portions 550 may be provided to at least one surface 505 of the facing battery cells 500. Preferably, the plurality of uneven portions 550 may be provided to all of the surfaces 505 of the facing battery cells 500.

The plurality of uneven portions 550 may have a predetermined surface roughness and may be preferably made of a coating material C having a surface roughness capable of forming convex and concave unevenness and coated on the surface 505 of the at least one battery cells 500.

The coating material C may be an aerogel with an insulating property. The aerogel may be a silica aerogels. When the battery cell 500 is manufactured, the coating material C may be sprayed onto the surface 505 of the battery cell 500 through a spray device S and applied to the surface 505 of the battery cells 500 to form the plurality of uneven portions 550.

In this embodiment, since the adjacent battery cells 500 among the plurality of battery cells 500 stacked by means of the plurality of uneven portions 550 are disposed in point contact with each other, when any one of the battery cells 500 is heated excessively, the heat transfer H to the adjacent battery cells 500 may be delayed.

That is, in this embodiment, since the adjacent battery cells 500 make point contact with each other through the plurality of uneven portions 550, when any one of the battery cells 500 is abnormally overheated, the heat transfer to the adjacent battery cells 500 may be delayed as much as possible, compared to the case where the battery cells 500 are disposed in surface contact with each other, thereby delaying the ignition or explosion of the entire battery module 10.

Accordingly, in this embodiment, when an abnormal heat is generated due to an internal short or the like in any one battery cell 500, the ignition or explosion of the entire battery module 10 is delayed through the plurality of uneven portions 550, thereby securing the time for a user to evacuate from the ignition or explosion and also effectively protecting the safety of the user.

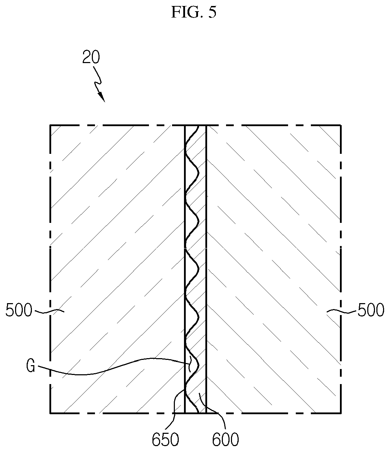

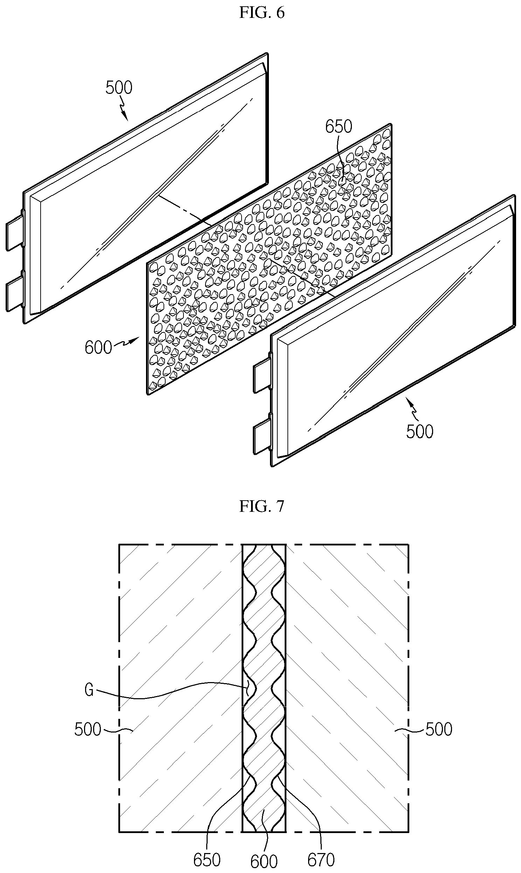

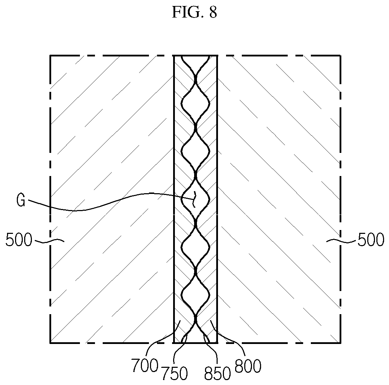

FIGS. 5 and 6 are diagrams for illustrating a battery module according to another embodiment of the present disclosure, and FIGS. 7 and 8 are diagrams for illustrating a sheet member according to still another embodiment of the present disclosure.

Since the battery module 20 according to this embodiment is similar to the battery module 10 of the former embodiment, the same configuration as the former embodiment will not be described again, and the features different from the former embodiment will be described.

Referring to FIGS. 5 and 6, the battery module 20 may further include at least one sheet member 600 provided between the facing battery cells 500.

The sheet member 600 may be provided between every facing battery cells 500 and may have a plurality of uneven portions 650.

The plurality of uneven portions 650 may be provided to at least one surface of the sheet member 600. The plurality of uneven portions 650 may be in point contact with the surface of the facing battery cells 500 to form a plurality of pores G. As above, the plurality of uneven portions 650 may be provided to the separate sheet member 600, instead of being provided by applying a coating material.

As shown in FIG. 7, the plurality of uneven portions 650, 670 forming the plurality of pores G may also be provided to both surfaces of the sheet member 600, respectively. In addition, as shown in FIG. 8, a plurality of sheet members 700, 800 may be provided between the facing battery cells 500, and a plurality of uneven portions 750, 850 may be formed at the plurality of sheet members 700, 800, respectively.

As described above, the plurality of uneven portions 650, 670, 750, 850 for forming the plurality of pores G to delay the heat transfer between the adjacent battery cells 500 may be separately provided by means of the sheet members 600, 700, 800, instead of being prepared by applying the coating material C as in the former embodiment. Here, the separate sheet members 600, 700, 800 may be sheet films having high surface roughness.

Meanwhile, as shown in FIG. 8, in a structure where the plurality of uneven portions 750, 850 are formed at each of the plurality of sheet members 700, 800, it is possible to effectively prevent a point pressure from being applied to the facing battery cells 500. For this, the plurality of sheet members 700, 800 are respectively made of a material having elasticity, and the uneven portions 750, 850 may be formed to have a blunt end, instead of a sharp end. If a point pressure is applied to the battery cells 500, heat generation increases at the corresponding site, which may cause an internal short circuit. In this embodiment, in the case of the plurality of sheet members 700, 800, the facing uneven portions 750, 850 may form the plurality of pores G between the uneven portions 750, 850, and a flat surface of the sheet members 700, 800 opposite to the uneven portions 750, 850 is in contact with the battery cells 500, so it is possible to effectively prevent the point pressure from being applied between these battery cells 500.

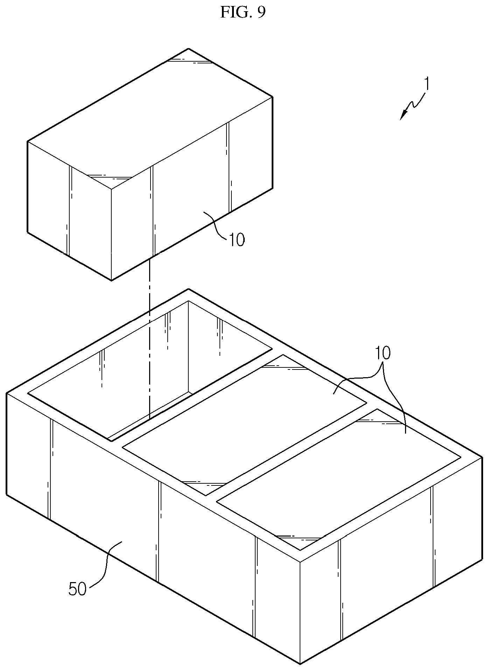

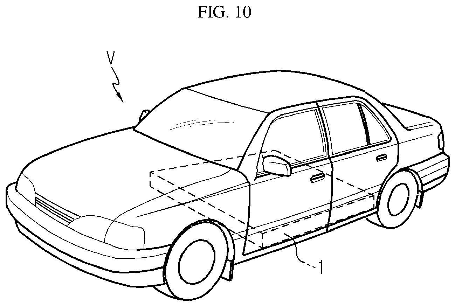

FIG. 9 is a diagram for illustrating a battery pack according to an embodiment of the present disclosure, and FIG. 10 is a diagram for illustrating a vehicle according to an embodiment of the present disclosure.

Referring to FIGS. 9 and 10, a battery pack 1 may include at least one battery module 10 according to the former embodiment and a pack case 50 for packaging the at least one battery module 10.

The at least one battery module may be the battery module 20 of the former embodiment, and the battery module may be provided in plural. If the battery module is provided in plural, the battery modules may be provided as a group of the battery module 10 and the battery module 20 of the former embodiment.

The battery pack 1 may be provided to a vehicle V as a fuel source of the vehicle V. As an example, the battery pack 1 may be provided to a vehicle V such as an electric vehicle, a hybrid vehicle, and various other-type vehicles capable of using the battery pack 1 as a fuel source.

In addition, the battery pack 1 may be provided in other devices, instruments or facilities such as an energy storage system using a secondary battery, in addition to the vehicle V.

As described above, the battery pack 1 of this embodiment and devices, instruments or facilities such as a vehicle V, which have the battery pack 1, include the battery module 10 as described above, and thus it is possible to implement a battery pack 1 having all the advantages of the battery module 10 described above, or devices, instruments, facilities or the like such as a vehicle V, which have the battery pack 1.

According to various embodiments as above, it is possible to provide a battery module 10, 20, which may secure stability by delaying the heat transfer to adjacent battery cells 500 when any one of the plurality of battery cells 500 heats abnormally, a battery pack 1 including the battery module 10, 20, and a vehicle V including the battery pack 1.

While the embodiments of the present disclosure have been shown and described, it should be understood that the present disclosure is not limited to the specific embodiments described, and that various changes and modifications can be made within the scope of the present disclosure by those skilled in the art, and these modifications should not be understood individually from the technical ideas and views of the present disclosure.

## Claims

1. A battery module, comprising:
a module case having a heatsink mounted to at least one side thereof; and
a plurality of battery cells accommodated in the module case and stacked to be electrically connected to each other,
wherein a plurality of pores are formed between facing battery cells among the plurality of battery cells to delay heat transfer.

2. The battery module according to claim 1,
wherein a plurality of uneven portions are provided to a surface of at least one battery cell among the facing battery cells so that the plurality of uneven portions make point contact with surfaces of adjacent battery cells to form the plurality of pores.

3. The battery module according to claim 2,
wherein the plurality of uneven portions are provided to all of surfaces of the facing battery cells.

4. The battery module according to claim 2,
wherein the plurality of uneven portions have a predetermined surface roughness and is made of a coating material that is applied to the surface of the at least one battery cells.

5. The battery module according to claim 4,
wherein the coating material is made of an aerogel with an insulating property.

6. The battery module according to claim 2, further comprising:
a sheet member provided between the facing battery cells to have the plurality of uneven portions.

7. The battery module according to claim 6,
wherein the plurality of uneven portions are provided to at least one surface of the sheet member.

8. The battery module according to claim 7,
wherein the plurality of uneven portions are provided to both surfaces of the sheet member.

9. The battery module according to claim 7,
wherein the plurality of uneven portions are disposed to face each other so that the plurality of pores are formed therebetween, and
wherein a portion of the sheet member that is in contact with the battery cell is flat.

10. The battery module according to claim 1,
wherein the plurality of battery cells are stacked along a horizontal direction of the module case, and
wherein the heatsink is mounted to an upper side or a lower side of the module case that faces an edge portion of the plurality of battery cells.

11. A battery pack, comprising:
at least one battery module according to claim 1; and
a pack case configured to package the at least one battery module.

12. A vehicle, comprising:
at least one battery pack according to claim 11.
